# EUROPÄISCHE PATENTSCHRIFT

(11) **EP 4 055 794 B1**
(45) Veröffentlichungstag und Bekanntmachung des Hinweises auf die Patenterteilung: **10.01.2024**
(21) Anmeldenummer: 20801251.8
(22) Anmeldetag: 04.11.2020
(51) Int. Cl.: H04J 3/06, H04J 3/14, H04L 12/28

(54) **VERFAHREN ZUR SICHERUNG DER ZEITSYNCHRONISATION IN EINEM NETZWERK GEGEN UNAUTORISIERTE ÄNDERUNGEN**
METHOD FOR SECURING TIME SYNCHRONIZATION IN A NETWORK AGAINST UNAUTHORIZED CHANGES
PROCÉDÉ DE SÉCURISER LA SYNCHRONISATION DU TEMPS D'UN RESEAU CONTRE MODIFICATIONS NON AUTORISÉES

(30) Priorität: 05.11.2019 DE 102019217035
(43) Veröffentlichungstag der Anmeldung: 14.09.2022
(73) Patentinhaber: Continental Automotive Technologies GmbH, 30165 Hannover (DE)
(72) Erfinder: ZINNER, Helge, 60488 Frankfurt am Main (DE); BRAND, Julian, 60488 Frankfurt am Main (DE)
(74) Vertreter: Continental Corporation
(86) Internationale Anmeldenummer: PCT/EP2020/080934
(87) Internationale Veröffentlichungsnummer: WO 2021/089607

(56) Entgegenhaltungen:
- EP-A1- 3 288 197
- DE-A1-102014 204 752
- US-A1- 2013 227 008
- US-A1- 2015 127 978
- US-A1- 2019 245 690
- US-B1- 9 450 846
- ITKIN EYAL ET AL: "A security analysis and revised security extension for the precision time protocol", 2016 IEEE INTERNATIONAL SYMPOSIUM ON PRECISION CLOCK SYNCHRONIZATION FOR MEASUREMENT, CONTROL, AND COMMUNICATION (ISPCS), IEEE, 4. September 2016 (2016-09-04), Seiten 1-6, XP032971413, DOI: 10.1109/ISPCS.2016.7579501 [gefunden am 2016-09-28]

## Beschreibung

### FELD

Die vorliegende Erfindung betrifft Kommunikationsnetzwerke mit miteinander zeitsynchronisierten Netzwerkgeräten, insbesondere in Bordnetzen von Fahrzeugen.

### HINTERGRUND

Ethernet-Technologien werden zunehmend in Fahrzeugen eingesetzt und ersetzen dort ältere bzw. proprietäre Datenverbindungen und -busse.

Ethernet-Verbindungen unterstützen auf dem Layer 3 des OSI-Schichtenmodells eine Vielzahl von Vermittlungsprotokollen für die Übertragung von Datenpaketen zwischen Sendern und Empfängern. In den höheren Protokollschichten erfolgt die Segmentierung des Datenstroms in Pakete, die Prozesskommunikation zwischen miteinander kommunizierenden Systemen, die Übersetzung von Daten in eine systemunabhängige Form und schließlich die Bereitstellung von Funktionen für Anwendungen.

Systeme in Fahrzeugen, die über Ethernet-Verbindungen miteinander kommunikativ verbunden sind, können besonders hohe Anforderungen an die Zuverlässigkeit der Übertragung und an die zeitliche Koordination von Datenpaketen stellen. Insbesondere für sicherheitskritische Anwendungen in Fahrzeugen, bspw. die Übertragung von Sensor- und Steuerinformationen für das autonome Fahren oder Fahrerunterstützungssysteme, werden hohe Anforderungen an die zeitliche Koordination gestellt.

Der Verbreitungsgrad zeitlich synchronisierter Netzwerkgeräte wird in Zukunft weiter zunehmen, u.a. weil eine immer größere Zahl von Steuergeräten Sensordaten unterschiedlicher Sensoren übertragen, die zur Bereitstellung von Sicherheits- und Komfortfunktionen verknüpft und ausgewertet werden. Diese Verknüpfung von Sensordaten unterschiedlicher Sensoren wird auch als Sensorfusion bezeichnet. Ein besonders wichtiger Aspekt bei der Fusion von Sensordaten ist die zeitliche Zusammengehörigkeit der Sensordaten. Je nach Anwendung kann es erforderlich sein, auf Milli- oder Mikrosekunden genau zusammengehörende Sensordaten zu fusionieren, während bei anderen Anwendungen unter Umständen ein größerer zeitlicher Abstand der Erfassungszeitpunkte zulässig sein kann. Es ist auch vorstellbar, dass die Erfassungszeitpunkte im Bereich von Nanosekunden genau zusammengehören müssen. Außer den für die Sensorfusion benötigten Daten können aber bspw. auch Daten, die bei der Überwachung des Betriebs des Fahrzeugs erfasst wurden und lediglich für Wartungszwecke oder zur Dokumentation des zulassungsgemäßen und ordnungsgemäßen Betriebs genutzt werden strengen Anforderungen für deren zeitlich korrekte Erfassung und Speicherung unterliegen.

Fast alle in Fahrzeugen eingesetzten Ethernet-Kommunikationsnetzwerke nutzen ein Protokoll zur Zeitsynchronisation, das eine globale Zeitbasis in dem Netzwerk bereitstellt. Die Zeitsynchronisierung in Ethernet-Netzwerken ist bspw. in dem IEEE 802.1AS-Standard vereinbart, der auf dem Precision Time Protocol (PTP) basiert. PTP definiert eine Master-Slave-Uhrenhierarchie mit einer besten Uhr innerhalb eines Netzwerks, die auch als Grandmaster Clock bezeichnet wird. Von dieser besten Uhr, dem Grandmaster, leitet sich die Zeitbasis der übrigen in diesem Netzwerk befindlichen Netzwerkgeräte ab. Der Best Master Clock Algorithm (BMCA) dient zur Ermittlung dieser besten Uhr und der Bekanntmachung dieser Informationen im Netzwerk. Zur Aufrechterhaltung der korrekten Synchronisierung senden IEEE 802.1AS-fähige Systeme zyklisch Bekanntmachungsnachrichten zu ihren Nachbarknoten mit Informationen zur besten Uhr des Netzwerks. Der Empfänger einer solchen Nachricht vergleicht diese Informationen mit den Merkmalen seiner eigenen Uhr und den eventuell bereits an einer anderen physikalischen Schnittstelle empfangenen Nachrichten mit Informationen über die Uhren anderer Netzwerkgeräte. Auf Basis dieser Nachrichten wird ein Zeitsynchronisationsbaum aufgestellt. Jeder physikalischen Schnittstelle, im Weiteren auch als Port bezeichnet, wird in diesem Zuge einer von vier Zuständen zugewiesen. Den Zustand "Master Port" bekommt der Port, der einen kürzeren Weg zum Grandmaster hat als sein Verbindungspartner. Der Zustand "Slave Port" wird dann zugeordnet, wenn an diesem Netzwerkgerät noch kein anderer Port diesen Zustand besitzt. Den Zustand "disabled" wählt derjenige Port, welcher das PTP-Protokoll nicht vollständig unterstützen kann. Der Zustand "passiv" wird gewählt, wenn keiner der anderen drei Zustände zutrifft.

Bei einer Variante des PTP, dem generalized Precision Time Protocol (gPTP), kommunizieren jeweils zwei Netzwerkgeräte zur Zeitsynchronisation stets direkt miteinander, und keines der zwei Netzwerkgeräte leitet eine empfangene Nachricht zur Zeitsynchronisation einfach nur an ein weiteres Netzwerkgerät im Netzwerk weiter. Vielmehr wird eine empfangene Zeitinformation von dem Netzwerkgerät vor dem Weiterleiten um Verzögerungen auf der Empfangsleitung und in dem Netzwerkgerät selbst korrigiert, bevor die korrigierte Zeitinformation weitergeleitet wird. Diese Netzwerkgeräte werden auch als "time-aware systems" bezeichnet.

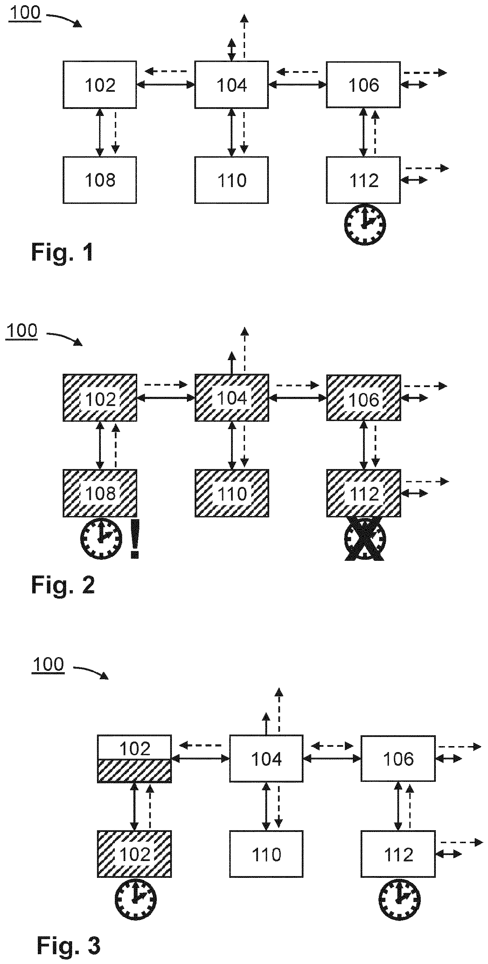

Figur 1 zeigt ein exemplarisches Blockdiagramm eines Fahrzeugnetzwerks 100 mit mehreren mit einer ersten Grandmaster Clock zeitsynchronisierten Netzwerkgeräten 102, 104, 106, 108, 110 und 112. Dabei sind jeweils die Netzwerkgeräte 102 und 108, 102 und 104, 104 und 110, 104 und 106 sowie 106 und 112 über bidirektionale Kommunikationsverbindungen miteinander verbunden. Netzwerkgeräte 104, 106 und 108 sind zudem mit weiteren, in der Figur nicht dargestellten Netzwerkgeräten über bidirektionale Kommunikationsverbindungen verbunden. Jedes der Netzwerkgeräte 102 - 112 hat einen gemäß IEEE 802.1AS-Standard synchronisierbaren Zeitgeber. Netzwerkgerät 112 ist dabei nach Ausführung des im Standard vereinbarten BMCA als Grandmaster Clock für das gesamte System ermittelt worden, d.h., von Netzwerkgerät 112 ausgehend werden Nachrichten zur Zeitsynchronisation in das Netzwerk gesendet. Dabei sendet Netzwerkgerät 112 Nachrichten zur Zeitsynchronisation an das direkt mit ihm verbundene Netzwerkgerät 106, sowie an ein weiteres, nicht in der Figur gezeigtes Netzwerkgerät. Die Senderichtung der Nachrichten zur Zeitsynchronisation ist jeweils durch die neben den Kommunikationsverbindungen abgebildeten gestrichelten Pfeile angedeutet. Netzwerkgerät 106 korrigiert die von Netzwerkgerät 112 empfangene Zeitinformation um die zuvor ermittelte Laufzeit auf der Kommunikationsverbindung zu Netzwerkgerät 112 und die Zeit, die in dem Netzwerkgerät 106 für eine Korrektur und Weiterleitung benötigt wird, und sendet eine entsprechend modifizierte Nachrichte zur Zeitsynchronisation an Netzwerkgerät 104 sowie an ein weiteres, nicht in der Figur dargestelltes Netzwerkgerät weiter. Dabei beinhaltet die Nachrichten zur Zeitsynchronisation neben der korrigierten Zeitinformation auch Informationen über die Grandmaster Clock des Systems, in diesem Fall Netzwerkgerät 112. Netzwerkgerät 104 verfährt entsprechend und sendet erneut um entsprechende Laufzeiten korrigierte Nachrichten zur Zeitsynchronisation an Netzwerkgeräte 110 und 102, sowie an ein weiteres, nicht in der Figur gezeigtes Netzwerkgerät. Wiederum entsprechend sendet Netzwerkgerät 102 eine korrigierte Zeitinformation an das Netzwerkgerät 108. Aufgrund der jeweiligen Korrektur der Zeitinformation vor dem Weiterleiten sind alle Zeitgeber in den Netzwerkgeräten auf die Zeit der Grandmaster Clock synchronisiert, ausgenommen etwaiger verbleibender Restungenauigkeiten aufgrund individueller Abweichungen der Korrekturen der Zeitinformation vor dem jeweiligen Weiterleiten. Die Grandmaster Clock sendet zyklisch Nachrichten zur Zeitsynchronisation in das Netzwerk, die dann wie vorstehend beschrieben weiterverteilt werden.

Der Standard IEEE 802.1AS erlaubt, dass zu jeder Zeit das zeitgebende System, der Grandmaster, wechseln kann. Hierfür wird der Best Master Clock Algorithmus (BMCA) erneut durchgeführt. Wenn bspw. ein Steuergerät mit veränderten Uhrparametern betrieben wird oder ein neues Steuergerät zu dem Netzwerk hinzukommt wird der BMCA durchgeführt und stets die Uhr mit den aktuell besten Uhrparametern von den Netzwerkgeräten des Systems ausgewählt. Der BMCA kann auch durch einen Software- oder Hardwarefehler in einem Netzwerkgerät ausgelöst werden, oder von einem Angreifer durch entsprechende Manipulation der Software oder Hardware herbeigeführt werden. Ein solcher Fall ist in Figur 2 dargestellt.

In Figur 2 sendet Netzwerkgerät 108 Announce-Nachrichten an Netzwerkgerät 102, welche Uhrenparameter einer besseren Uhr als die von Netzwerkgerät 112 beinhalten. Netzwerkgerät 102 sendet diese weiter an die übrigen Netzwerkgeräte, welche sukzessive ihre lokalen Uhren auf die neuen Grandmaster Clock synchronisieren. Netzwerkgerät 112 stellt nun nicht mehr die Grandmaster Clock, sondern empfängt Nachrichten zur Zeitsynchronisation, die auf Zeitinformationen der Uhr von Netzwerkgerät 108 beruhen. Die geänderte Zeitsynchronisierung ist durch die Schraffur der die Netzwerkgeräte repräsentierenden Rechtecke und die teilweise geänderte Richtung der die Ausbreitung der Nachrichten zur Zeitsynchronisation angebenden gestrichelten Pfeile angedeutet.

Wenn es einem Angreifer gelingt, die Zeitsynchronisation in einem Fahrzeugnetzwerk zu übernehmen und einzelne oder alle Netzwerkgeräte falsch zu synchronisieren kann das gefährliche Auswirkungen auf die Sicherheit des Fahrzeugbetriebs haben. Wenn bspw. Daten mehrerer unterschiedlicher Sensoren zusammengeführt werden, um Fahrzeugsysteme zu steuern ist es erforderlich, dass die Sensordaten innerhalb eines vorbestimmten zeitlichen Fensters erfasst wurden, um zu einem bestimmten Zeitpunkt eine gültige Sensordatenbasis für einen Steuer- oder Regeleingriff zu bilden. Zeitlich weit auseinanderliegende Daten, die nicht innerhalb eines für die Sensorfusion nötigen engen Zeitfensters erfasst wurden, die jedoch aufgrund einer von einem Angreifer manipulierten Zeitsynchronisation mit einem innerhalb des Zeitfensters liegenden Zeitstempel versehen wurden, können zu Störungen des Betriebs bis hin zu einem Systemausfall und schlimmstenfalls zu einem Unfall führen.

Aus dem Stand der Technik sind einige Ansätze zur Erkennung von Änderungen der Konfiguration oder Struktur eines Kommunikationsnetzwerks unter Nutzung der Zeitsynchronisation des Netzwerks bekannt. Eine unautorisierte Änderung der Konfiguration des Netzwerks kann bspw. das Zwischenschalten eines Netzwerkgeräts umfassen, das Nachrichten abfängt und veränderte Nachrichten weitersendet. Dies kann dazu genutzt werden, den sicheren und ordnungsgemäßen Betrieb zu verhindern oder zumindest zu stören. Die DE 1 02012216689B4 schlägt zur Erkennung von Angriffen dieser Art vor, Laufzeiten von Nachrichten zur Zeitsynchronisation innerhalb des Kommunikationsnetzes zu überwachen. Ein später zwischen zwei Netzwerkgeräten geschaltetes zusätzliches Netzwerkgerät, das Nachrichten abfängt und weiterleitet, oder eine die Datenweiterleitung betreffende Manipulation der Software eines Netzwerkgeräts, wird die Laufzeit der Nachrichten zwangsläufig verändern, selbst wenn die weitergeleitete Nachricht nicht verändert wird, so dass der Angriff erkannt werden kann.

Eine korrekte und sichere Zeitbasis in Netzwerken ist auch in anderem Zusammenhang von großer Bedeutung. So ist bspw. in der DE102014200558A1 ein gesicherter Netzwerk-Zugangsschutz beschrieben, bei der eine authentifizierte Zeitmessung genutzt wird, welche mittels Authentifizierungsprotokollen abgesichert ist. Dabei wird eine Laufzeit von Nachrichten ermittelt, und die Integrität der Nachrichten zur Zeitsynchronisation wird durch ein zusätzliches Protokoll validiert.

US 2013/227008 A1 (YANG YANG [US]) 29. August 2013 offenbart Auswahl eines Grandmasters auf Basis einer Kandidatenliste. US 9 450 846 B1 (HUANG WEI-JEN [US] ET AL) 20. September 2016 (2016-09-20) offenbart die Überwachung eines Netzwerkes, das mittels PTP synchronisiert ist. Knoten können neben einer ersten Uhr, weitere Uhren, insbesondere virtuelle Uhren umfassen.

Während die Nutzung der Zeitsynchronisationsmechanismen und -protokolle in Netzwerken für sekundäre Zwecke weit verbreitet ist, hat die Absicherung der Zeitsynchronisation selbst vor Angriffen bislang keine oder nur wenig Beachtung gefunden.

Es ist daher eine Aufgabe der Erfindung, ein Verfahren und ein Netzwerkgerät anzugeben, welches eine unautorisierte Änderung der Zeitsynchronisation in einem Netzwerk zumindest erschwert.

### BESCHREIBUNG

Diese Aufgabe wird durch das in Anspruch 1 angegebene Verfahren und das in Anspruch 8 angegebene Netzwerkgerät gelöst. Ausgestaltungen und Weiterentwicklungen des Verfahrens bzw. des Systems sind in den jeweiligen abhängigen Ansprüchen angegeben.

Die erfindungsgemäße Absicherung der Zeitsynchronisation richtet sich vor allem darauf, eine unerwünschte bzw. nicht autorisierte Änderung der Grandmaster Clock einer Basis-Zeitdomäne des Netzwerks durch einen Angreifer oder eine Hard- oder Softwarefehlfunktion nach einer initialen Synchronisierung zu verhindern bzw. zumindest zu erschweren. Eine Basis-Zeitdomäne bezeichnet hier die grundlegende Zeitdomäne, die für alle Netzwerkgeräte des Netzwerks gültig ist.

In dieser Beschreibung bezeichnet eine Kommunikationsverbindung eine physikalische oder logische Verbindung zwischen einem Sender und einem Empfänger. Kommunikationsverbindungen können durch Portnummern eindeutig identifiziert werden. Portnummern können dazu dienen, mehrere unterschiedliche von einem Endpunkt ausgehende oder an einem Endpunkt endende Kommunikationsverbindungen zu unterscheiden.

Die Begriffe Netzwerkgerät und Netzwerkknoten werden in dieser Beschreibung synonym verwendet, sofern der jeweilige Kontext keine Unterscheidung nahelegt.

In der nachfolgenden Beschreibung wird davon ausgegangen, dass eine korrekte und unmanipulierte Initialisierung der Basis-Zeitdomäne erfolgt ist, bspw. gemäß dem Best Master Clock Algorithmus (BMCA) des IEEE 802.1AS-Standards, und dass alle Netzwerkgeräte des Netzwerks eine Information darüber haben, welches Netzwerkgerät die Grandmaster Clock der Basis-Zeitdomäne für das Netzwerk bereitstellt, bzw. welche Clock-ID und welche Clock-Parameter die Grandmaster Clock hat. Jedes Netzwerkgerät kann auch eine Information darüber haben, über welche seiner physikalischen Schnittstellen die gültigen Nachrichten zur Zeitsynchronisation kommen. Diese Ausgangssituation entspricht der weiter oben mit Bezug auf Figur 1 beschriebenen Situation.

Ein erfindungsgemäßes Verfahren zur Sicherung der Zeitsynchronisation in einem Netzwerk gegen unautorisierte Änderungen umfasst die Überwachung aller physikalischen Kommunikationsschnittstellen eines ersten Netzwerkgeräts auf das Eintreffen von Announce-, Sync-, oder FollowUp-Nachrichten von einem zweiten Netzwerkgerät, mit denen Informationen zur besten Uhr des Netzwerks verbreitet werden. Im Normalfall werden in vernetzten Systemen, die dem IEEE 802.1AS-Standard entsprechen, solche Nachrichten zyklisch gesendet und ggf. weitergeleitet.

Aus den empfangenen Announce-, Sync-, oder FollowUp-Nachrichten werden die Zeitinformationen extrahiert, u.a. Grandmaster Clock-Class, Grandmaster Clock Accuracy, Grandmaster Priority1, Grandmaster Priority 2 und Current UTC-Offset.

Außerdem werden die Nachrichten von dem ersten Netzwerkgerät darauf geprüft, ob sie für die Basis-Zeitdomäne gelten. Wenn das nicht der Fall ist und die Announce-, Sync-, oder FollowUp -Nachricht bspw. für eine separate Zeitdomäne gilt, zu der das erste Netzwerkgerät nicht gehört, kann die Nachricht dem Standard entsprechend weitergeleitet werden. Ansonsten kann, bspw. wenn die Nachricht für eine virtuelle Basis-Zeitdomäne gilt, die von dem ersten Netzwerkgerät zuvor bereits für von dem zweiten Netzwerkgerät kommende Nachrichten zur Zeitsynchronisation gestartet wurde, die Nachricht zur Verifizierung der in ihr übertragenen Uhrenparameter an einen weiter unten beschriebenen Prozessschritt weitergeleitet werden, oder sie kann verworfen werden.

Gilt die Announce-Nachricht für die Basis-Zeitdomäne wird geprüft, ob die Announce-Nachricht eine neue Grandmaster Clock mit besseren Uhrenparametern bekannt gibt, als diejenigen der bisherigen Grandmaster Clock. Wenn dies nicht der Fall ist, kann die Announce-Nachricht ignoriert werden, oder es kann eine Nachricht zur Zeitsynchronisation mit den Informationen zu der Grandmaster Clock des Netzwerks von dem ersten Netzwerkgerät an das zweite Netzwerkgerät gesendet werden.

Wenn die in der Announce-Nachricht empfangenen Uhrenparameter eine Uhr mit besseren Parametern beschreiben wird erfindungsgemäß das zweite Netzwerkgerät bzgl. von ihm gesendeter Nachrichten zur Zeitsynchronisation vom Rest des Netzwerks isoliert. Die Isolation dient dazu, die von dem zweiten Netzwerkgerät bereitgestellte potentielle neue Grandmaster Clock nicht sofort in dem System zu übernehmen bzw. zu aktivieren oder deren Nachrichten zur Zeitsynchronisation auch nur weiterzuleiten, weil noch nicht sicher ist, ob das zweite Netzwerkgerät als neuer Zeitgeber sicher und vertrauenswürdig ist, und sich in einem unerwünschten Fall das gesamte System innerhalb weniger Millisekunden auf eine u. U. unzuverlässige oder falsche Uhr umstellen würde. Dazu startet das erste Netzwerkgerät eine virtuelle Basis-Zeitdomäne für die von dem zweiten Netzwerkgerät eintreffenden Nachrichten zur Zeitsynchronisation. Auf der Basis der vom zweiten Netzwerkgerät eintreffende Nachrichten zur Zeitsynchronisation sendet das erste Netzwerkgerät keine eigenen Nachrichten zur Zeitsynchronisation an weitere mit ihm direkt verbundene Netzwerkgeräte, vielmehr sendet es nur gemäß dem IEEE 802.1AS-Standard notwendige Requests und Antworten an das zweite Netzwerkgerät. Die bislang gültige Zeitsynchronisierung wird bis auf das zweite Netzwerkgerät von dem ersten Netzwerkgerät und allen anderen Netzwerkgeräten unverändert fortgesetzt. Die virtuelle Basis-Zeitdomäne gilt nur für das zweite Netzwerkgerät und einen vom Rest des ersten Netzwerkgeräts isolierten Bereich.

Das erste Netzwerkgerät führt außerdem eine Verifikation der von dem zweiten Netzwerkgerät gesendeten Uhrenparameter durch. Dies kann bspw. einen Vergleich mit während der Initialisierung der Zeitsynchronisation von dem zweiten Netzwerkgerät gemeldeten Uhrenparametern umfassen, die in dem ersten Netzwerkgerät gespeichert sind, eine Prüfung auf zulässige oder unzulässige Kombinationen von Clock Class und Clock Accuracy, aber auch einen Vergleich der in von dem zweiten Netzwerkgerät gesendeten Nachrichten zur Zeitsynchronisation enthaltenen Zeitinformationen mit den von der ursprünglichen Grandmaster Clock gesendeten Zeitinformationen über einen längeren Zeitraum, oder eine Prüfung daraufhin, ob in über die betreffende Schnittstelle aufeinanderfolgend empfangenen Nachrichten zur Zeitsynchronisation mehrfach unterschiedliche Uhrenparameter übertragen wurden. Im Zuge der Verifikation kann auch eine Autorisierung der neuen Grandmaster Clock auf einer höheren Protokollebene erfolgen, bspw. durch ein vorübergehend mit dem System verbundenes Steuergerät mit ausreichenden Rechten. Die Autorisierung kann auch durch das erste Netzwerkgerät mit einer entsprechenden Nachricht an ein mit höheren Rechten ausgestattetes Netzwerkgerät angefragt werden. Wenn die Verifizierung ergibt, dass die von dem zweiten Netzwerkgerät vorgeschlagene Grandmaster Clock vertrauenswürdig bzw. gültig ist, löst das erste Netzwerkgerät die virtuelle Basis-Zeitdomäne auf, aktualisiert seine bzgl. der Grandmaster Clock gespeicherten Informationen, und sendet auf den neuen Uhrenparametern basierende Nachrichten zur Zeitsynchronisation in das Netzwerk. Anderenfalls lehnt das erste Netzwerkgerät die Uhr als neue Grandmaster Clock ab.

Die Ablehnung kann bspw. dadurch erfolgen, dass das erste Netzwerkgerät selbst eine Nachricht zur Zeitsynchronisation an das zweite Netzwerkgerät sendet, in der es vorgibt, eine bessere Uhr als die von dem zweiten Netzwerkgerät vorgeschlagene Uhr zu haben. Das zweite Netzwerkgerät müsste daraufhin sofort das Senden eigener Sync-, Announce- oder FollowUp-Nachrichten einstellen. Wenn das der Fall ist, wird die virtuelle Zeitdomäne aufgelöst und das Verfahren fährt mit der Überwachung der eintreffenden Nachrichten zur Zeitsynchronisation fort. Wenn das zweite Netzwerkgerät das Senden eigener Sync-, Announce- oder FollowUp-Nachrichten trotz "Antworten" des ersten Netzwerkgeräts mit einer "besseren" Clock nicht einstellt, wird die virtuelle Zeitdomäne zur Isolation der von dem zweiten Netzwerkgerät kommenden Nachrichten zur Zeitsynchronisation vom Rest des Netzwerks solange aufrechterhalten, bis das zweite Netzwerkgerät das Senden der Sync-, Announce- oder FollowUp-Nachrichten einstellt, oder die Gültigkeit der von dem zweiten Netzwerkgerät gemeldeten Clock auf einer höheren Protokollebene bestätigt wird.

Bevor das erste Netzwerkgerät eine virtuelle Basis-Zeitdomäne startet kann es dem zweiten Netzwerkgerät eine Nachricht mit dem Vorschlag senden, eine separate Zeitdomäne einzurichten, in der das zweite Netzwerkgerät als Grandmaster Clock fungiert. Wenn das zweite Netzwerkgerät diesen Vorschlag akzeptiert unterhält das erste Netzwerkgerät die separate Zeitdomäne. Das erste Netzwerkgerät muss dabei nicht notwendigerweise Nachrichten zur Zeitsynchronisation für die separate Zeitdomäne in das Netzwerk weiterleiten; es kann die Nachrichten einfach Terminieren bzw. Ignorieren, auch ohne dies dem zweiten Netzwerkgerät mitzuteilen. Es kann jedoch in bestimmten Fällen diese Nachrichten weiterleiten, bspw. an ein zur Prüfung der für die separate Zeitdomäne gültigen Nachrichten zur Zeitsynchronisation vorgesehenes Netzwerkgerät. Dabei werden die Nachrichten bspw. mit einer separaten Domänennummer. Wenn das zweite Netzwerkgerät den Vorschlag nicht akzeptiert, startet es wie zuvor beschrieben die virtuelle Basis-Zeitdomäne und führt die weiteren Verfahrensschritte aus.

Auch wenn das erste Netzwerkgerät eine virtuelle Basis-Zeitdomäne gestartet hat kann es von dem zweiten Netzwerkgerät kommende nicht-zeitbezogene Kommunikation in der üblichen Weise über das Netzwerk an die jeweiligen Empfänger weiterleiten. Dabei kann das erste Netzwerkgerät zeitkritische Nachrichten, bspw. Nachrichten mit Zeitstempeln, die erkennbar für sicherheitsrelevante Anwendungen bestimmt sind, verwerfen, oder es kann eine Nachricht in das Netzwerk senden, die anderen Netzwerkgeräten zu erkennen gibt, dass die von dem zweiten Netzwerkgerät kommenden Nachrichten zumindest bzgl. der zugehörigen Zeitinformation nicht vertrauenswürdig sind. Es ist auch möglich, dass das erste Netzwerkgerät die Nachrichten mit einem eigenen Zeitstempel versieht, und die Nachricht entsprechend kennzeichnet. Dazu kann ein Flag oder sonstiges Feld in der Nachricht oder einem Header vorgesehen sein.

Ein erfindungsgemäßes Computerprogrammprodukt enthält Befehle, die bei der Ausführung durch einen Computer diesen dazu veranlassen, eine oder mehrere Ausgestaltungen und Weiterentwicklungen des vorstehend beschriebenen Verfahrens ausführen.

Das Computerprogrammprodukt kann auf einem computerlesbaren Datenträger gespeichert sein. Der Datenträger kann physisch verkörpert sein, bspw. als Festplatte, CD, DVD, Flash-Speicher oder dergleichen, der Datenträger kann aber auch ein moduliertes elektrisches, elektromagnetisches oder optisches Signal umfassen, das von einem Computer mittels eines entsprechenden Empfängers empfangen und in dem Speicher des Computers gespeichert werden kann.

Ein das erfindungsgemäße Verfahren implementierendes Netzwerkgerät umfasst neben einem Mikroprozessor und nichtflüchtigem und flüchtigem Speicher mindestens zwei physikalische Kommunikationsschnittstellen. Die Elemente des Netzwerkgeräts sind mittels einer oder mehreren Datenleitungen oder -bussen kommunikativ miteinander verbunden. Das Netzwerkgerät ist dazu eingerichtet, Nachrichten zur Zeitsynchronisation an den Schnittstellen zu empfangen und die Prüfung und ggf. Isolierung der Announce-, Sync- oder FollowUp-Nachrichten entsprechend dem vorstehend beschriebenen Verfahren vorzunehmen.

Ein erfindungsgemäßes System mit mehreren über ein Kommunikationsnetzwerk verbundenen Netzwerkgeräten weist zumindest ein Netzwerkgerät auf, das dazu eingerichtet ist, das vorstehend beschriebene erfindungsgemäße Verfahren auszuführen.

Das erfindungsgemäße Verfahren kann in vorteilhafter Weise dazu genutzt werden, die Zuverlässigkeit der Zeitsynchronisation insbesondere von Kommunikationsverbindungen in sicherheitsrelevanten Netzwerken zu verbessern, wie sie bspw. bei der Übertragung von Sensordaten für autonomes Fahren oder Fahrerunterstützungssysteme benötigt werden.

Das erfindungsgemäße Verfahren kann mit existierenden Netzwerkgeräten umgesetzt werden, wobei ggf. nur Anpassungen in der Software erforderlich sind, um die Einrichtung und den Betrieb separater Zeitdomänen zu ermöglichen. Dadurch fallen, wenn überhaupt, für die Umsetzung nur geringe zusätzliche Kosten an. Auch bestehende Systeme können durch entsprechend geänderte Software dazu eingerichtet werden, das Verfahren umzusetzen. Ein weiterer Vorteil des erfindungsgemäßen Verfahrens liegt darin, dass die jeweils zugrundeliegende Hardwareplattform ohne Bedeutung ist, solange diese die Einrichtung oder der Betrieb mehrerer separater Zeitdomänen und das PTP unterstützen.

### KURZE BESCHREIBUNG DER ZEICHNUNG

Im Folgenden wird die Erfindung mit Bezug auf die Zeichnung exemplarisch erläutert. In der Zeichnung zeigt:
- Fig. 1: ein exemplarisches Blockdiagramm eines Fahrzeugnetzwerks mit mehreren mit einer ersten Grandmaster Clock zeitsynchronisierten Netzwerkgeräten,
- Fig. 2: ein exemplarisches Blockdiagramm des Fahrzeugnetzwerks mit mehreren zeitsynchronisierten Netzwerkgeräten aus Figur 1, bei dem die erste Grandmaster Clock von einer zweiten Grandmaster Clock abgelöst wurde,
- Fig. 3: ein exemplarisches Blockdiagramm eines Fahrzeugnetzwerks mit mehreren zeitsynchronisierten Netzwerkgeräten bei der Ausführung eines Aspekts des erfindungsgemäßen Verfahrens,
- Fig. 4: ein schematisches Flussdiagramm einer Ausführung des erfindungsgemäßen Verfahrens, und
- Fig. 5: ein exemplarisches Blockdiagramm eines zur Ausführung des erfindungsgemäßen Verfahrens eingerichteten Netzwerkgeräts.

Gleiche oder ähnliche Elemente können in den Figuren mit denselben Bezugszeichen referenziert sein.

### BESCHREIBUNG VON AUSFÜHRUNGSBEISPIELEN

Figuren 1 und 2 wurden bereits weiter oben erläutert und werden daher an dieser Stelle nicht erneut beschrieben.

Figur 3 zeigt ein exemplarisches Blockdiagramm eines Fahrzeugnetzwerks 100 mit mehreren zeitsynchronisierten Netzwerkgeräten bei der Ausführung eines Aspekts des erfindungsgemäßen Verfahrens. Wie zuvor mit Bezug auf Figur 2 beschrieben hat Netzwerkgerät 108 eine Announce-Nachricht an Netzwerkgerät 102 gesendet, mit der eine Uhr mit besseren Uhrenparametern bekannt gegeben wird. Nach dem in der IEEE 802.1AS-Standard festgelegten Verfahren würde diese Uhr die Grandmaster Clock für das gesamte Netzwerk werden. Um eine einfache

Manipulation zu erschweren oder zu verhindern startet das Netzwerkgerät 102 eine virtuelle Zeitdomäne, in der die von dem Netzwerkgerät 108 vorgeschlagene Uhr als Grandmaster Clock fungiert. Für die anderen Netzwerkgeräte ist wie zuvor die von Netzwerkgerät 112 bereitgestellte Uhr die Grandmaster Clock. Die von Netzwerkgerät 102 bewirkte Trennung der Zeitdomänen in die bisherige Zeitdomäne und die virtuelle Zeitdomäne ist durch die teilweise Schraffierung von Netzwerkgerät 102 angedeutet. Die gestrichelten Pfeile geben die Senderichtung der Nachrichten zur Zeitsynchronisation von der Grandmaster Clock des Netzwerks bzw. der virtuellen Zeitdomäne an.

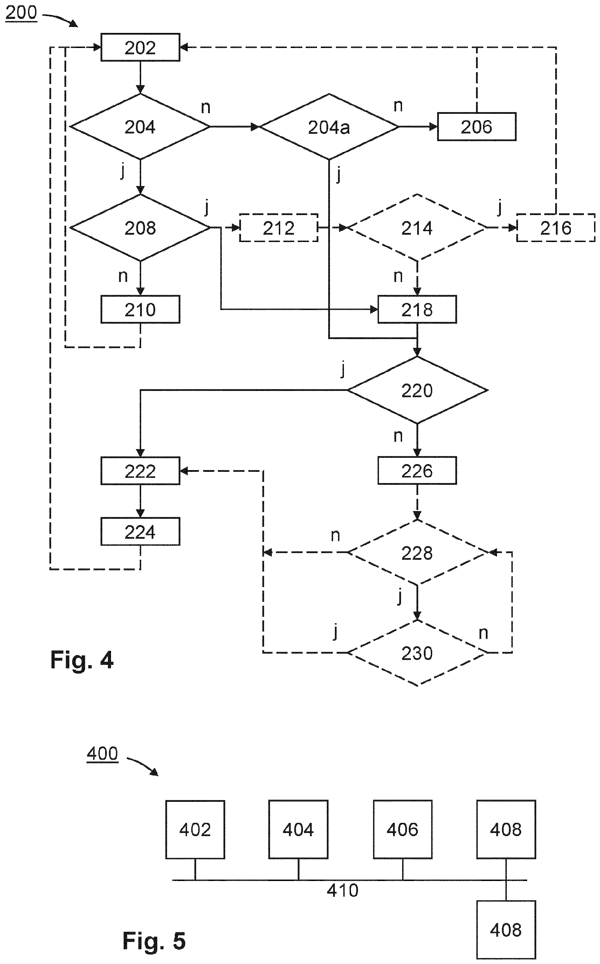

Figur 4 zeigt ein schematisches Flussdiagramm einer Ausführung des erfindungsgemäßen Verfahrens 200 in einem ersten Netzwerkgerät. In Schritt 202 erfolgt zunächst die Überwachung der Schnittstellen auf Announce-, Sync- oder FollowUp-Nachrichten von einem daran angeschlossenen zweiten Netzwerkgerät. Wenn eine solche Nachrichten zur Zeitsynchronisation eintrifft wird sie zunächst darauf geprüft, ob sie für die initial eingerichtete und synchronisierte Basis-Zeitdomäne gilt. Ist dies nicht der Fall, "nein"-Zweig von Schritt 204, wird in Schritt 204a geprüft, ob die Nachricht zur Zeitsynchronisation für eine zuvor gestartete virtuelle Basis-Zeitdomäne gilt. Wenn dies nicht der Fall ist, "nein"-Zweig von Schritt 204a, wird die Nachrichten zur Zeitsynchronisation in Schritt 206 weitergeleitet. Wenn die Prüfung in Schritt 204 ergibt, dass die Nachrichten zur Zeitsynchronisation für die Basis-ZS gilt, "ja"-Zweig von Schritt 204, wird als nächstes in Schritt 208 geprüft, ob die Nachrichten zur Zeitsynchronisation eine neue Grandmaster Clock mit besseren Uhrenparametern bekannt gibt, als diejenigen der bisherigen Grandmaster Clock. Ist dies nicht der Fall, "nein"-Zweig von Schritt 208, wird in Schritt 210 die Nachricht verworfen bzw. ignoriert und die Überwachung wird fortgeführt. Wenn die Prüfung in Schritt 208 ergibt, dass eine neue Grandmaster Clock mit besseren Uhrenparametern als diejenigen der bisherigen Grandmaster Clock bekannt gegeben wird, "ja"-Zweig von Schritt 208, wird in Schritt 218 eine virtuelle Basis-Zeitdomäne durch das erste Netzwerkgerät gestartet. Vor dem Starten der virtuellen Basis-Zeitdomäne in Schritt 218 kann das erste Netzwerkgerät dem zweiten Netzwerkgerät optional in Schritt 212 vorschlagen, eine separate Zeitdomäne einzurichten. Wenn das zweite Netzwerkgerät diesen Vorschlag annimmt, "ja"-Zweig von Schritt 214, kann das erste Netzwerkgerät die separate Zeitdomäne unterhalten und die für die separate Zeitdomäne geltenden Nachrichten zur Zeitsynchronisation in das übrige Netzwerk entsprechend weiterleiten. Wenn das zweite Netzwerkgerät den Vorschlag zur Einrichtung einer separaten Zeitdomäne nicht akzeptiert, "nein"-Zweig von Schritt 214, startet das erste Netzwerkgerät die virtuelle Basis-Zeitdomäne. In der virtuellen Basis-Zeitdomäne werden nun in Schritt 220 die von dem zweiten Netzwerkgerät gesendeten Uhrenparameter verifiziert. Wenn die Prüfung bereits in Schritt 204a ergibt, dass die von dem zweiten Netzwerkgerät empfangene Nachrichten zur Zeitsynchronisation für eine zuvor eingerichtete virtuelle Basis-Zeitdomäne gilt, "ja"-Zweig von Schritt 204a, fährt das Verfahren unter Umgehung der Prüfungen in Schritt 208 und ggf. Schritt 214 gleich mit der Verifikation der Uhrenparameter in Schritt 220 fort. Wenn die Verifizierung in Schritt 220 ergibt, dass die von dem zweiten Netzwerkgerät vorgeschlagene Grandmaster Clock vertrauenswürdig bzw. gültig ist, "ja"-Zweig von Schritt 220, löst das erste Netzwerkgerät die virtuelle Zeitdomäne in Schritt 222 auf, aktualisiert seine gespeicherten Informationen bzgl. der Grandmaster Clock in Schritt 224, und sendet ab diesem Zeitpunkt auf den neuen Uhrenparametern basierende Nachrichten zur Zeitsynchronisation in das Netzwerk. Wenn die Verifizierung in Schritt 220 ergibt, dass die von dem zweiten Netzwerkgerät vorgeschlagene Grandmaster Clock nicht vertrauenswürdig bzw. ungültig ist, "nein"-Zweig von Schritt 220, lehnt das erste Netzwerkgerät die von dem zweiten Netzwerkgerät vorgeschlagene Uhr in Schritt 226 als Grandmaster Clock für die Basis-Zeitdomäne ab. Die Ablehnung kann das Senden einer eigenen Announce-Nachricht durch das erste Netzwerkgerät an das zweite Netzwerkgerät umfassen, mit Uhrenparametern, die eine bessere Uhr darstellen als die in der Nachrichten zur Zeitsynchronisation des zweiten Netzwerkgeräts übermittelten. Die virtuelle Basis-Zeitdomäne wird solange aufrechterhalten, wie Announce-, Sync- oder FollowUp-Nachrichten von dem zweiten Netzwerkgerät eintreffen, und keine Autorisierung auf einer höheren Protokollebene erfolgt. Die entsprechenden Prüfungen erfolgen in Schritten 228 und 230.

Figur 5 zeigt ein exemplarisches Blockdiagramm eines zur Ausführung des erfindungsgemäßen Verfahrens eingerichteten Netzwerkgeräts 400. Das Netzwerkgerät 400 umfasst neben einem Mikroprozessor 402 flüchtigen und nichtflüchtigen Speicher 404, 406 sowie zwei Kommunikationsschnittstellen 408. Die Elemente des Netzwerkgeräts sind über eine oder mehrere Datenverbindungen oder -busse 410 kommunikativ miteinander verbunden. Der nichtflüchtige Speicher 406 enthält Programminstruktionen die, wenn sie von dem Mikroprozessor 402 ausgeführt werden, zumindest eine Ausgestaltung des erfindungsgemäßen Verfahrens implementieren.

### Bezugszeichenliste:

- 100: Netzwerk
- 102-112: Netzwerkgeräte
- 200: Verfahren
- 202: Nachrichten zur Zeitsynchronisation überwachen
- 204: Prüfung Basis-Zeitdomäne
- 204a: Prüfung virtuelle Basis-Zeitdomäne
- 206: Weiterleiten in virtueller Basis-Zeitdomäne
- 208: Prüfung Uhrenparameter
- 210: Verwerfen/Ignorieren
- 212: separate Zeitdomäne vorschlagen
- 214: Prüfung ob separate Zeitdomäne akzeptiert
- 216: Weiterleiten
- 218: Starten der virtuellen Basis-Zeitdomäne
- 220: Verifizierung Uhrenparameter
- 222: virtuelle Zeitdomäne auflösen
- 224: Aktualisieren gespeicherter Uhrenparameter
- 226: neue Uhr ablehnen
- 228: virtuelle Zeitdomäne aufrechterhalten
- 230: Prüfung auf Autorisierung der neuen Uhr
- 400: Netzwerkgerät
- 402: Mikroprozessor
- 404: RAM
- 406: ROM
- 408: Kommunikationsschnittstelle
- 410: Bus

## Patentansprüche

1. Verfahren (200) zur Sicherung der Zeitsynchronisation in einem Netzwerk (100) gegen unautorisierte Änderungen der Grandmaster Clock einer Basis-Zeitdomäne, umfassend:
- Überwachen (202) der physikalischen Kommunikationsschnittstellen eines ersten Netzwerkgeräts auf das Eintreffen von Nachrichten zur Zeitsynchronisation von einem zweiten Netzwerkgerät, mittels derer Informationen zur besten Uhr des Netzwerks verbreitet werden,
- erstes Prüfen (204), ob die Nachrichten zur Zeitsynchronisation für die initial eingerichtete und synchronisierte Basis-Zeitdomäne gilt und, wenn dies der Fall ist:
- zweites Prüfen (208), ob die Nachrichten zur Zeitsynchronisation eine neue Grandmaster Clock mit besseren Uhrenparametern bekannt gibt, als diejenigen der bisherigen Grandmaster Clock, und, wenn dies der Fall ist:
- Starten (218) einer virtuellen Basis-Zeitdomäne durch das erste Netzwerkgerät, wobei das erste Netzwerkgerät keine auf den Nachrichten zur Zeitsynchronisation des zweiten Netzwerkgerät basierenden Nachrichten zur Zeitsynchronisation in das übrige Netzwerk weiterleitet, und wobei in Bezug auf die virtuelle Basis-Zeitdomäne nur für die notwendigen Requests und Antworten von dem ersten Netzwerkgerät an das zweite Netzwerkgerät gesendet werden,
- Verifizieren (220) der von dem zweiten Netzwerkgerät gesendeten Uhrenparameter,
wobei, wenn die Verifizierung ergibt, dass die von dem zweiten Netzwerkgerät vorgeschlagene Grandmaster Clock vertrauenswürdig bzw. gültig ist, das erste Netzwerkgerät die virtuelle Basis-Zeitdomäne auflöst (222), seine gespeicherten Informationen bzgl. der Grandmaster Clock aktualisiert (224), und ab diesem Zeitpunkt auf den neuen Uhrenparametern basierende Nachrichten zur Zeitsynchronisation in das Netzwerk sendet, oder anderenfalls die Uhr als neue Grandmaster Clock für die Basis-Zeitdomäne ablehnt (226).

2. Verfahren nach Anspruch 1, außerdem umfassend, vor dem Starten (218) der virtuellen Basis-Zeitdomäne:
- Senden (212) einer Antwort an das zweite Netzwerkgerät, in der die Einrichtung einer separaten Zeitdomäne vorgeschlagen wird, und
- drittes Prüfen (214), ob das zweite Netzwerkgerät die zusätzliche Zeitdomäne akzeptiert und, wenn dies der Fall ist:
- Ignorieren, Terminieren oder Weiterleiten (216) der für die zusätzliche Zeitdomäne von dem zweiten Netzwerkgerät eintreffenden Nachrichten zur Zeitsynchronisation durch das erste Netzwerkgerät,
oder, wenn dies nicht der Fall ist:
- Starten (218) der virtuellen Basis-Zeitdomäne durch das erste Netzwerkgerät und Ausführung der sich daran anschließenden Verfahrensschritte.

3. Verfahren nach Anspruch 1, wobei das Verifizieren (220) umfasst:
- Vergleichen empfangener Uhrenparameter mit während einer Initialisierung der Zeitsynchronisation von dem zweiten Netzwerkgerät gemeldeten Uhrenparametern, die in dem ersten Netzwerkgerät gespeichert sind,
- Prüfung auf zulässige oder unzulässige Kombinationen von Clock Class und Clock Accuracy,
- Vergleichen der in von dem zweiten Netzwerkgerät gesendeten Nachrichten zur Zeitsynchronisation enthaltenen Zeitinformationen mit den von der ursprünglichen Grandmaster Clock gesendeten Zeitinformationen über einen längeren Zeitraum, oder
- Empfangen einer Autorisierung auf einer höheren Protokollebene.

4. Verfahren nach Anspruch 1, wobei das Ablehnen (226) umfasst:
- Senden einer Announce-Nachricht an das zweite Netzwerkgerät mit Uhrenparametern, die eine bessere Uhr darstellen als die in der Announce-Nachricht des zweiten Netzwerkgeräts übermittelten,
- Aufrechterhalten der virtuellen Basis-Zeitdomäne, solange weitere Announce-Nachrichten von dem zweiten Netzwerkgerät eintreffen (228), und keine Autorisierung der von dem zweiten Netzwerkgerät annoncierten neuen Grandmaster Clock auf einer höheren Protokollebene erfolgt (230).

5. Verfahren nach Anspruch 1, außerdem umfassend, wenn das erste Prüfen (204) ergibt, dass die von dem zweiten Netzwerkgerät empfangene Nachrichten zur Zeitsynchronisation nicht für die Basis-Zeitdomäne gilt:
- Prüfen (204a), ob die Nachrichten zur Zeitsynchronisation für eine zuvor gestartete virtuelle Basis-Zeitdomäne gilt und, falls ja:
- Verifizieren (220) der von dem zweiten Netzwerkgerät gesendeten Uhrenparameter, und Ausführung der sich daran anschließenden Verfahrensschritte,
oder, falls nicht:
- Weiterleiten oder Ignorieren (206) der Nachrichten zur Zeitsynchronisation.

6. Verfahren nach Anspruch 1, außerdem umfassend, wenn das zweite Prüfen (208) ergibt, dass die empfangene Announce-Nachricht keine neue Grandmaster Clock mit besseren Uhrenparametern bekannt gibt, als diejenigen der bisherigen Grandmaster Clock:
- Ignorieren (210) der Announce-Nachricht.

7. Verfahren nach Anspruch 1, wobei von dem zweiten Netzwerkgerät an dem ersten Netzwerkgerät eintreffende, nicht der Uhrensynchronisierung dienende aber mit einer Zeitinformation versehene Nachrichten von dem ersten Netzwerkgerät erst weitergeleitet werden, nachdem das erste Netzwerkgerät der Nachricht eine Information über die unklare Vertrauenswürdigkeit der Zeitinformation hinzugefügt hat, oder nachdem das erste Netzwerkgerät alle anderen Netzwerkgeräte des Netzwerks über die unklare Vertrauenswürdigkeit der Zeitinformation in von dem zweiten Netzwerkgerät kommenden Nachrichten informiert hat.

8. Netzwerkgerät (400) umfassend einen Mikroprozessor (402), flüchtigen und nichtflüchtigen Speicher (404, 406), zwei oder mehr Kommunikationsschnittstellen (408), welche über einen oder mehrere Datenleitungen oder -busse (410) kommunikativ miteinander verbunden sind, wobei das Netzwerkgerät (400) dazu eingerichtet ist, das Verfahren nach einem oder mehreren der Ansprüche 1 - 7 auszuführen.

9. System (100) mit mehreren Netzwerkgeräten (104 - 112) nach Anspruch 8, wobei zumindest eines der Netzwerkgeräte (102) dazu eingerichtet ist, ein Verfahren nach einem oder mehreren der Ansprüche 1 bis 7 auszuführen.

10. Fahrzeug mit einem System (100) nach Anspruch 9.

11. Computerprogrammprodukt umfassend Befehle, die bei der Ausführung des Programms durch einen Computer diesen veranlassen, das Verfahren nach einem oder mehreren der Ansprüche 1 - 7 auszuführen.

12. Computerlesbarer Datenträger, auf dem das Computerprogrammprodukt nach Anspruch 11 gespeichert ist.

## Claims

1. Method (200) for protecting the time synchronization in a network (100) against unauthorized changes to the grandmaster clock of a base time domain, comprising:
- monitoring (202) the physical communication interfaces of a first network device for the arrival of messages relating to time synchronization from a second network device, which messages are used to disseminate information relating to the best clock in the network,
- performing first checking (204) to determine whether the messages relating to time synchronization apply to the initially set-up and synchronized base time domain and, if this is the case:
- performing second checking (208) to determine whether the messages relating to time synchronization announce a new grandmaster clock having better clock parameters than those of the present grandmaster clock, and, if this is the case:
- the first network device starting (218) a virtual base time domain, wherein the first network device forwards no messages relating to time synchronization that are based on the messages relating to time synchronization of the second network device to the remainder of the network, and wherein only for the necessary requests are responses sent from the first network device to the second network device in relation to the virtual base time domain,
- verifying (220) the clock parameters sent by the second network device, wherein, if the verification reveals that the grandmaster clock proposed by the second network device is trustworthy or valid, the first network device discontinues the virtual base time domain (222), updates its stored information concerning the grandmaster clock (224), and, from this time onward, sends messages relating to time synchronization that are based on the new clock parameters to the network, or otherwise declines the clock as the new grandmaster clock for the base time domain (226).

2. Method according to Claim 1, additionally comprising, before the virtual base time domain is started (218):
- sending (212) a response to the second network device proposing the setup of a separate time domain, and
- performing third checking (214) to determine whether the second network device accepts the additional time domain and, if this is the case:
- the first network device ignoring, terminating or forwarding (216) the messages relating to time synchronization that arrive from the second network device for the additional time domain,
or, if this is not the case:
- the first network device starting (218) the virtual base time domain, and the subsequent method steps being performed.

3. Method according to Claim 1, wherein the verifying (220) comprises:
- comparing received clock parameters with clock parameters reported by the second network device during an initialization of the time synchronization that are stored in the first network device,
- a check for admissible or inadmissible combinations of clock class and clock accuracy,
- comparing the time information contained in messages relating to time synchronization that are sent by the second network device with the time information sent by the original grandmaster clock over a longer period, or
- receiving an authorization on a higher protocol level.

4. Method according to Claim 1, wherein the declining (226) comprises:
- sending an Announce message to the second network device with clock parameters that represent a better clock than those transmitted in the Announce message of the second network device,
- maintaining the virtual base time domain for as long as further Announce messages arrive from the second network device (228), and no authorization of the new grandmaster clock announced by the second network device takes place on a higher protocol level (230).

5. Method according to Claim 1, additionally comprising, if the first checking (204) reveals that the messages relating to time synchronization received from the second network device do not apply to the base time domain:
- checking (204a) whether the messages relating to time synchronization apply to a previously started virtual base time domain and, if so:
- verifying (220) the clock parameters sent by the second network device, and performing the subsequent method steps,
or, if not:
- forwarding or ignoring (206) the messages relating to time synchronization.

6. Method according to Claim 1, additionally comprising, if the second checking (208) reveals that the received Announce message does not announce a new grandmaster clock having better clock parameters than those of the present grandmaster clock:
- ignoring (210) the Announce message.

7. Method according to Claim 1, wherein messages that arrive on the first network device from the second network device and are not used for clock synchronization but are provided with time information are forwarded by the first network device only after the first network device has added information to the message about the unclear trustworthiness of the time information, or after the first network device has informed all other network devices in the network about the unclear trustworthiness of the time information in messages coming from the second network device.

8. Network device (400) comprising a microprocessor (402), volatile and nonvolatile memory (404, 406), two or more communication interfaces (408) communicatively connected to one another by way of one or more data lines or data buses (410), wherein the network device (400) is configured to perform the method according to one or more of Claims 1 - 7.

9. System (100) having multiple network devices (104 - 112) according to Claim 8, wherein at least one of the network devices (102) is configured to perform a method according to one or more of Claims 1 to 7.

10. Vehicle having a system (100) according to Claim 9.

11. Computer program product comprising commands that, when the program is executed by a computer, cause said computer to perform the method according to one or more of Claims 1 - 7.

12. Computer-readable data carrier on which the computer program product according to Claim 11 is stored.

## Revendications

1. Procédé (200) permettant de sécuriser la synchronisation temporelle dans un réseau (100) contre des modifications non autorisées de l'horloge grand maître d'un domaine temporel de base, comprenant les étapes suivantes consistant à :
- surveiller (202) les interfaces de communication physiques d'un premier appareil de réseau quant à l'arrivée de messages de synchronisation temporelle en provenance d'un deuxième appareil de réseau, au moyen desquels des informations concernant la meilleure horloge du réseau sont diffusées,
- contrôler (204) une première fois si les messages de synchronisation temporelle sont valables pour le domaine temporel de base établi initialement et synchronisé, et si c'est le cas :
- contrôler (208) une deuxième fois si les messages de synchronisation temporelle communiquent une nouvelle horloge grand maître avec de meilleurs paramètres d'horloge que ceux de l'horloge grand maître précédente, et si c'est le cas :
- démarrer (218) un domaine temporel de base virtuel par le premier appareil de réseau, dans lequel le premier appareil de réseau ne retransmet au reste du réseau aucun message de synchronisation temporelle basé sur les messages de synchronisation temporelle du deuxième appareil de réseau, et dans lequel, en ce qui concerne le domaine temporel de base virtuel, des réponses ne sont envoyées du premier appareil de réseau au deuxième appareil de réseau que pour les requêtes nécessaires,
- vérifier (220) des paramètres d'horloge envoyés par le deuxième appareil de réseau,
dans lequel, si la vérification indique que l'horloge grand maître proposée par le deuxième appareil de réseau est fiable ou valable, le premier appareil de réseau résout (222) le domaine temporel de base virtuel, met à jour (224) ses informations mémorisées concernant l'horloge grand maître, et à partir de ce moment-là, envoie dans le réseau des messages de synchronisation temporelle basés sur les nouveaux paramètres d'horloge, ou sinon rejette (226) l'horloge comme nouvelle horloge grand maître pour le domaine temporel de base.

2. Procédé selon la revendication 1, comprenant en outre, avant le démarrage (218) du domaine temporel de base virtuel les étapes suivantes consistant à :
- envoyer (212) une réponse au deuxième appareil de réseau dans laquelle l'établissement d'un domaine temporel séparé est proposé, et
- contrôler (214) une troisième fois si le deuxième appareil de réseau accepte le domaine temporel supplémentaire, et si c'est le cas :
- ignorer, terminer ou retransmettre (216) par le premier appareil de réseau les messages de synchronisation temporel arrivant pour le domaine temporel supplémentaire en provenance du deuxième appareil de réseau, ou si ce n'est pas le cas :
- démarrer (218) le domaine temporel de base virtuel par le premier appareil de réseau et exécuter les étapes de procédé consécutifs.

3. Procédé selon la revendication 1, dans lequel la vérification (220) comprend les étapes consistant à :
- comparer des paramètres d'horloge reçus avec des paramètres d'horloge signalés par le deuxième appareil de réseau pendant une initialisation de la synchronisation temporelle, qui sont mémorisés sur le premier appareil de réseau,
- contrôler des combinaisons de classe d'horloge et de précision d'horloge admissibles ou inadmissibles,
- comparer les informations de temps contenues dans les messages de synchronisation temporelle envoyés par le deuxième appareil de réseau avec les informations de temps envoyées par l'horloge grand maître d'origine pendant une certaine période de temps, ou
- recevoir une autorisation sur un niveau de protocole supérieur.

4. Procédé selon la revendication 1, dans lequel le rejet (226) comprend les étapes consistant à :
- envoyer un message d'annonce au deuxième appareil de réseau avec des paramètres d'horloge qui représentent une meilleure horloge que ceux transmis dans le message d'annonce du deuxième appareil de réseau,
- maintenir le domaine temporel de base virtuel tant que d'autres messages d'annonce arrivent (228) en provenance du deuxième appareil de réseau, et qu'aucune autorisation de la nouvelle horloge grand maître annoncée par le deuxième appareil de réseau n'a lieu (230) sur un niveau de protocole supérieur.

5. Procédé selon la revendication 1, comprenant en outre, lorsque le premier contrôle (204) indique que les messages de synchronisation temporelle reçus du deuxième appareil de réseau ne sont pas valables pour le domaine temporel de base :
- contrôler (204a) si les messages de synchronisation temporelle sont valables pour un domaine temporel de base virtuel préalablement démarré, si oui :
- vérifier (220) les paramètres d'horloge envoyés par le deuxième appareil de réseau, et exécuter les étapes de procédé consécutives,
ou sinon :
- retransmettre ou ignorer (206) les messages de synchronisation temporelle.

6. Procédé selon la revendication 1, comprenant en outre, lorsque le deuxième contrôle (208) indique que le message d'annonce reçu ne communique aucune nouvelle horloge grand maître avec de meilleurs paramètres d'horloge que ceux de l'horloge grand maître précédente :
- ignorer (210) le message d'annonce.

7. Procédé selon la revendication 1, dans lequel des messages arrivant au premier appareil de réseau en provenance du deuxième appareil de réseau, qui ne servent pas à la synchronisation d'horloge mais sont munis d'une information de temps, sont retransmis par le premier appareil de réseau seulement après que le premier appareil de réseau a ajouté au message une information concernant la fiabilité incertaine de l'information de temps, ou après que le premier appareil de réseau a informé tous les autres appareils de réseau du réseau au sujet de la fiabilité incertaine de l'information de temps dans des messages provenant du deuxième appareil de réseau.

8. Appareil de réseau (400), comprenant un microprocesseur (402), une mémoire volatile et une mémoire non volatile (404, 406), deux ou plusieurs interfaces de communication (408) qui sont reliées en communication les unes aux autres par un(e) ou plusieurs lignes ou bus de données (410), dans lequel l'appareil de réseau (400) est conçu pour exécuter le procédé selon une ou plusieurs des revendications 1 à 7.

9. Système (100) comprenant plusieurs appareils de réseau (104 à 112) selon la revendication 8, dans lequel au moins l'un des appareils de réseau (102) est conçu pour exécuter un procédé selon une ou plusieurs des revendications 1 à 7.

10. Véhicule comprenant un système (100) selon la revendication 9.

11. Produit de programme informatique comprenant des instructions qui, lorsque le programme est exécuté par un ordinateur, font que celui-ci exécute le procédé selon une ou plusieurs des revendication 1 à 7.

12. Support de données lisible par ordinateur sur lequel est stocké le produit de programme informatique selon la revendication 11.
